# FASCICULE DE BREVET EUROPEEN

(11) **EP 2 313 644 B1**
(45) Date de publication et mention de la délivrance du brevet: **16.05.2012**
(21) Numéro de dépôt: 09737051.4
(22) Date de dépôt: 13.07.2009
(51) Int. Cl.: F03B 11/06, F04D 29/047

(54) **Machine hydraulique ayant un palier hydrostatique ou hydrodynamique avec les tuyères d'alimentation de replacement au secours**
Hydraulische Maschine mit einem hydrostatischen oder hydrodynamischen Lager mit Notfall-Ersatzleitungskanälen
Hydraulic machine having a hydrostatic or hydrodynamic bearing with substitute feed ducts in emergency

(30) Priorité: 15.07.2008 FR 0854798
(43) Date de publication de la demande: 27.04.2011
(73) Titulaire: ALSTOM Hydro France, 92300 Levallois Perret (FR)
(72) Inventeur: BERTEA, Jean-François, F-07300 Saint Jean De Muzols (FR); VUILLEROD, Gérard, F-38100 Grenoble (FR)
(74) Mandataire: Myon, Gérard Jean-Pierre
(86) Numéro de dépôt international: PCT/FR2009/051395
(87) Numéro de publication internationale: WO 2010/007306

(56) Documents cités:
- WO-A-2004/018870
- WO-A1-81/01449
- AU-B2- 411 295
- DE-A1- 2 025 636
- DE-A1- 2 356 817
- FR-A- 1 419 857
- GB-A- 724 737
- GB-A- 1 121 761
- US-A- 3 998 502
- US-A- 4 071 303
- US-A- 4 685 813

## Description

La présente invention concerne une machine hydraulique qui comprend une roue supportée par un arbre, cette roue et cet arbre étant mobiles en rotation autour d'un axe. La roue d'une telle machine est destinée à être traversée par un écoulement forcé, lequel est moteur lorsque la machine fonctionne en turbine et entraînée lorsque la machine fonctionne en pompe.

Dans de telle machine, un palier hydrostatique radial peut être prévu autour de l'arbre, avec une fonction de reprise des efforts radiaux subits par cet arbre. Un tel palier peut être ménagé autour d'une partie haute, d'une partie basse ou d'une partie intermédiaire de l'arbre. Il est connu d'équiper un palier hydrostatique d'un joint batardeau, par exemple un joint gonflable, qui permet de protéger le palier, des remontées d'eau polluée lorsque la machine et le système d'alimentation en eau du palier sont à l'arrêt. Un tel joint gonflable est dilaté lors des arrêts de la machine, afin d'isoler le palier de son environnement. En fonctionnement normal, le débit d'eau amené au palier est évacué par le haut et par le bas du palier, ce qui permet d'assurer à la fois la portance du palier et l'évacuation de l'énergie dissipée par les frottements fluides, grâce à la création d'un film d'eau continu. En cas de blocage d'un joint gonflable en configuration dilatée, l'eau du palier ne peut plus être évacuée vers le bas du palier, ce qui perturbe la circulation de l'eau et le fonctionnement du palier. En effet, la portance du palier est réduite et l'eau prisonnière en partie basse du palier a tendance à s'échauffer, avec un risque de transformation totale ou partielle du film d'eau en vapeur et de contact entre l'arbre et le coussinet fixe du palier.

Ces problèmes peuvent également se poser avec un palier dépourvu de joint gonflable et dans lequel l'évacuation de l'eau du palier est obstruée, vers le haut ou vers le bas, par tout autre obstacle.

Des problèmes analogues peuvent se poser avec des machines à axe horizontal, lesquelles peuvent également être équipées de joints hydrostatiques ou hydrodynamiques.

Il est par ailleurs connu de US-A-4 071 303 ou WO 81/01449 A1 de ménager, sur la surface externe d'un rotor de pompe, des alvéoles d'alimentation d'un palier à eau. Ces alvéoles sont reliées aux bord supérieur et inférieur du rotor pas des canaux d'évacuation de corps solides qui pourraient pénétrer dans les alvéoles. En cas d'obstruction du palier, en partie basse ou haute, le film d'eau qui le compose ne peut pas être évacué et risque d'être vaporisé, ce qui limite ou annule la portance du palier.

C'est à ces inconvénients qu'entend plus particulièrement remédier l'invention en proposant une machine hydraulique équipée d'un palier hydrostatique radial dont le fonctionnement est fiabilisé.

A cet effet, l'invention concerne une machine hydraulique comprenant une roue supportée par un arbre, la roue et l'arbre étant mobiles en rotation autour d'un axe, alors qu'un palier hydrostatique ou hydrodynamique radial est formé entre, d'une part, une surface périphérique radiale de l'arbre et, d'autre part, une surface radiale interne d'un organe fixe par rapport à l'axe, ce palier s'étendant entre deux bords constituant, en fonctionnement normal du palier, des zones d'évacuation d'un film d'eau formé dans le palier. Cette machine est caractérisée en ce qu'au moins une cavité est ménagée dans l'organe fixe et débouche sur sa surface radiale interne au voisinage d'un premier bord du palier, parmi ses deux bords, et en ce que l'organe fixe comprend des moyens de mise en communication fluidique de cette cavité avec un volume situé à l'extérieur du palier, au voisinage du second bord, parmi les deux bords précités, la cavité et les moyens de mise en communication étant aptes à évacuer une partie d'un écoulement formant le film d'eau, en cas d'impossibilité d'évacuation de ce film d'eau au niveau du premier bord.

Grâce à l'invention, en cas de blocage de l'évacuation de l'eau du palier hydrostatique ou hydrodynamique radial au voisinage d'un premier bord, supérieur, inférieur, avant ou arrière, suivant que la machine est à axe vertical ou horizontal, la cavité et les moyens de mise en communication ménagés dans l'organe fixe permettent d'évacuer l'eau du palier vers son autre bord, ce qui évite la création d'une zone d'eau morte dans le palier. La circulation d'eau dans le palier peut ainsi être maintenue, y compris en cas d'obstruction au niveau d'un des bords du palier, ce qui permet de maintenir la portance du palier.

Selon des aspects avantageux mais non obligatoires de l'invention, une telle machine peut incorporer une ou plusieurs des caractéristiques suivantes :
- Un joint batardeau est disposé au voisinage du bord du palier tourné vers la roue. Dans ce cas, lorsque la machine est à axe vertical, la cavité est avantageusement ménagée au-dessus du joint batardeau, au voisinage du bord inférieur du palier tournée vers la roue, alors que les moyens de mise en communication relient cette cavité avec un volume de la machine situé au-dessus du bord supérieur par rapport au palier. Lorsque la machine est axe vertical, la cavité peut être ménagée au voisinage du bord supérieur du palier, alors que les moyens de mise en communication relient la cavité avec une partie inférieure du palier, au-dessus du joint batardeau qui est disposé en-dessous du bord inférieur du palier.
- La cavité est une gorge annulaire ménagée dans l'organe fixe. En variante, la cavité est formée par la réunion de plusieurs cavités non jointives qui débouchent sur la surface radiale interne de l'organe fixe et sont chacune reliées à un conduit de l'organe fixe appartenant aux moyens de mise en communication.
- Les moyens de mise en communication comprennent des moyens de réduction de pression.
- Les moyens de mise en communication comprennent au moins un conduit reliant la cavité au volume situé au voisinage du second bord du palier
- Il est prévu des moyens de détermination de la pression d'eau dans un conduit appartenant aux moyens de mise en communication. Dans ce cas, ces moyens de détermination de pression sont avantageusement aptes à fournir à une unité de contrôle de la machine un signal représentatif de la pression d'eau dans le conduit précité.
- La cavité s'étend à une distance axiale du premier bord qui a une valeur inférieure à 10%, de préférence inférieure à 5%, de la dimension axiale du palier.
- La cavité a une dimension axiale dont la valeur est comprise entre 2,5 et 5% de la dimension axiale du palier.
- La cavité a une profondeur radiale sont la valeur est au moins vingt-cinq fois supérieure, de préférence cinquante fois supérieure, à l'épaisseur radiale du palier.

L'invention concerne également une installation de conversion d'énergie hydraulique et énergie électrique ou mécanique ou inversement, qui comprend une machine hydraulique telle que mentionnée ci-dessus. Une telle installation est plus fiable que celles de l'état de la technique dans la mesure où elle permet de s'accommoder de l'éventuelle obstruction d'un palier hydrostatique radial, au voisinage d'un de ses bords supérieur ou inférieur.

L'invention sera mieux comprise et d'autres avantages de celle-ci apparaîtront plus clairement à la lumière de la description qui va suivre de deux modes de réalisation d'une machine et d'une installation conformes à son principe, donné uniquement à titre d'exemple et fait en référence aux dessins annexés dans lesquels :
- la figure 1 est une coupe axiale de principe d'une machine et d'une installation conformes à un premier mode de réalisation de l'invention ;
- la figure 2 est une vue à plus grande échelle du détail II à la figure 1 ;
- la figure 3 est une vue à plus grande échelle du détail III à la figure 1 lorsqu'un joint gonflable de l'installation est bloqué ; et
- la figure 4 est une vue analogue à la figure 3 pour une machine à une installation conformes à un deuxième mode de réalisation de l'invention.

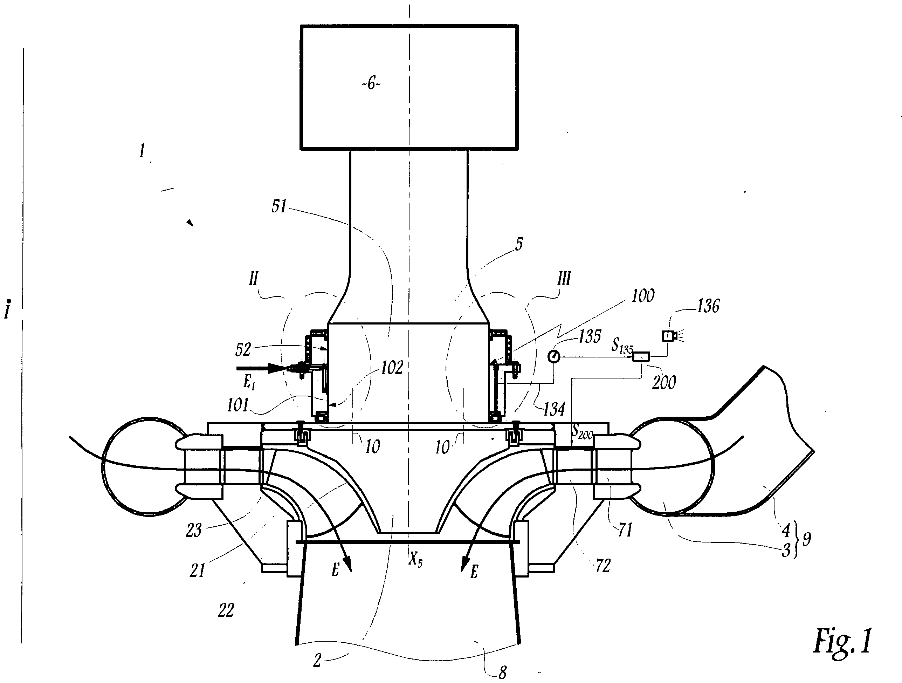

L'installation I représentée à la figure 1 comprend une turbine Francis 1 dont la roue 2 est alimentée à partir d'une bâche 3 dans laquelle débouche une conduite forcée 4. La turbine 1 comprend également un arbre 5 sur lequel est montée la roue 2 et qui tourne avec celle-ci autour d'un axe vertical X₅ qui est également un axe longitudinal de l'arbre 5. L'arbre 5 entraîne en rotation la partie tournante d'un alternateur 6.

Entre la bâche 3 et la roue 2 est disposée une série d'avant-directrices 71 et de directrices 72 dont la fonction est de guider et de réguler un écoulement E provenant de la conduite 4 et de la bâche 3 et destiné à traverser la roue 2, en direction d'un conduit d'aspiration 8.

La roue 2 comprend des aubes 21 qui s'étendent entre un plafond 22 et une ceinture 23.

Les éléments 3 et 4, ainsi que la structure de génie civile qui supportent la turbine 1 appartiennent à une structure fixe 9 par rapport à laquelle la roue 2 tourne autour de l'axe X₅.

La roue 2 est fixée sur l'extrémité inférieure 51 de l'arbre 5, couramment dénommée « pied d'arbre », au moyen de vis 10 représentées par leurs traits d'axe. Le pied d'arbre peut être monobloc avec le reste de l'arbre ou rapporté sur celui-ci.

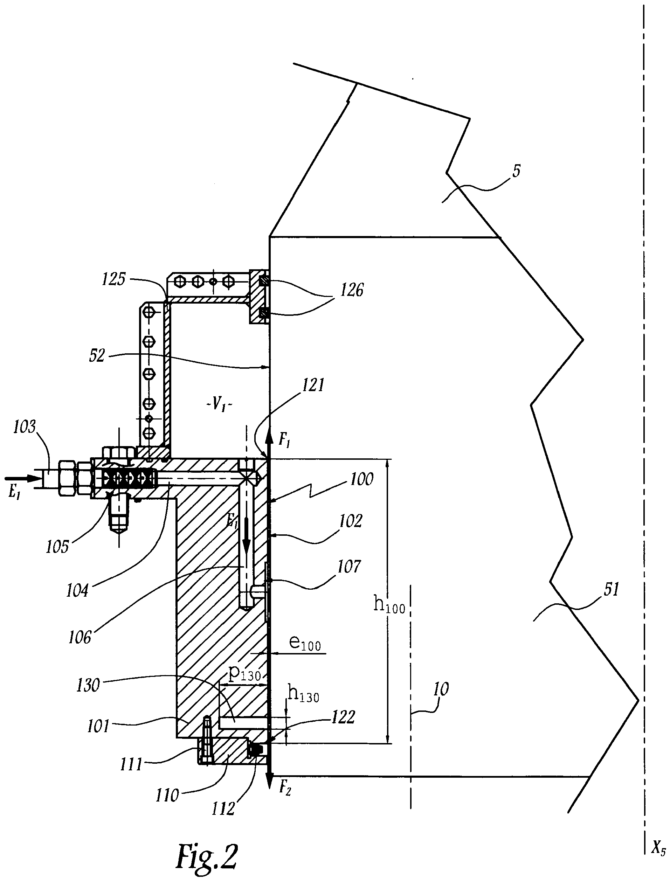

Afin de résister aux efforts radiaux auxquels est soumis le pied d'arbre 51, un palier hydrostatique 100 est formé entre une surface radiale externe 52 du pied d'arbre 51 et une surface radiale interne 102 d'un coussinet 101 de forme annulaire qui est disposé autour du pied d'arbre 51. Sur les figures 2 à 4, l'épaisseur radiale e₁₀₀ du palier 100 est exagérée, pour la clarté du dessin.

Un écoulement E₁ d'eau claire est fourni au palier 100, à partir de la conduite forcée 4, grâce à une conduite 103 raccordée sur un piquage 104 ménagé dans le coussinet 101. Pour la clarté du dessin, le raccordement entre les conduites 4 et 103 n'est pas montré sur les figures. Le piquage 104 est équipé d'une série de diaphragmes 105 qui permettent de limiter la pression de l'écoulement E₁ en aval. Le piquage 104 débouche dans un canal 106 qui alimente une dépression 107 ménagée dans la surface 102 et qui permet de répartir l'écoulement E₁. Ceci permet de gaver le palier 100 en eau, afin d'assurer la continuité d'un film d'eau autour de la surface 52.

Dans la présente description, les mots « haut », « bas », « supérieur » et « inférieur » correspondent à une disposition de l'installation I en configuration de fonctionnement dans laquelle l'axe X₅ est vertical et le haut d'un organe est dirigé vers le haut à la figure 1, alors que le bas d'un organe est dirigé vers le bas sur cette figure. L'adjectif « supérieur » qualifie une partie d'un organe dirigée vers le haut, à l'inverse d'une partie « inférieure » qui est dirigée vers le bas.

Une bride 110 est montée en partie basse du coussinet 101, grâce à des vis de fixation 111. Cette bride définit avec le coussinet 101 un logement de réception d'un joint gonflable 112 susceptible de venir en appui contre la surface 52 selon qu'il est ou non alimenté en fluide sous pression, en l'espèce en eau sous pression. Le joint gonflable 112 est un type de joint batardeau qui permet de protéger le palier 100 contre les remontées d'eau depuis la roue 2. D'autres types de joints batardeaux peuvent être utilisés avec l'invention, par exemple un joint axial.

On note 121 le bord supérieur du palier 100, c'est-à-dire la limite supérieure de l'interstice de faible épaisseur e₁₀₀ délimité entre les surfaces 52 et 102 et dans lequel est formé un film d'eau à partir de l'écoulement E₁. En pratique, le bord 121 est situé à la hauteur de l'arête supérieure de la surface 102. De la même manière, on note 122 le bord inférieur du palier 100 qui est délimité par l'arête inférieure de la surface 102, au dessus du logement du joint 112.

Une cuve supérieure 125 est montée sur le coussinet 101 et définit un volume annulaire V₁ au-dessus du bord 121 et radialement autour de la partie de la surface 52 qui n'est pas en regard de la surface 102. La cuve 125 porte deux joints 126 qui viennent en appui contre la surface 52, afin d'éviter les fuites d'eau vers le haut. Le volume V₁ est relié par un trop plein non représenté au puits d'exhaure de l'installation I, c'est-à-dire à la partie de l'installation dans laquelle sont collectées les fuites, avant d'être évacuées vers l'aval.

En fonctionnement normal du palier 100, c'est-à-dire lorsque l'arbre 5 tourne autour de l'axe X₅, l'écoulement E₁ forme un film d'eau à l'intérieur du palier 100, entre les bords 121 et 122, puis est évacué vers le haut et vers le bas, comme représenté respectivement par les flèches F₁ et F₂ à la figure 2. Cette évacuation continue de l'écoulement E₁ à partir du palier 100 garantit la portance de ce palier.

En cas d'arrêt de la turbine 1, et afin d'éviter que de l'eau potentiellement polluée remonte vers l'intérieur du palier 100, le joint gonflable 112 est mis sous pression, de telle sorte qu'il se contracte radialement en direction de l'axe X₅ et vient en appui contre la surface 52, en formant ainsi une barrière étanche.

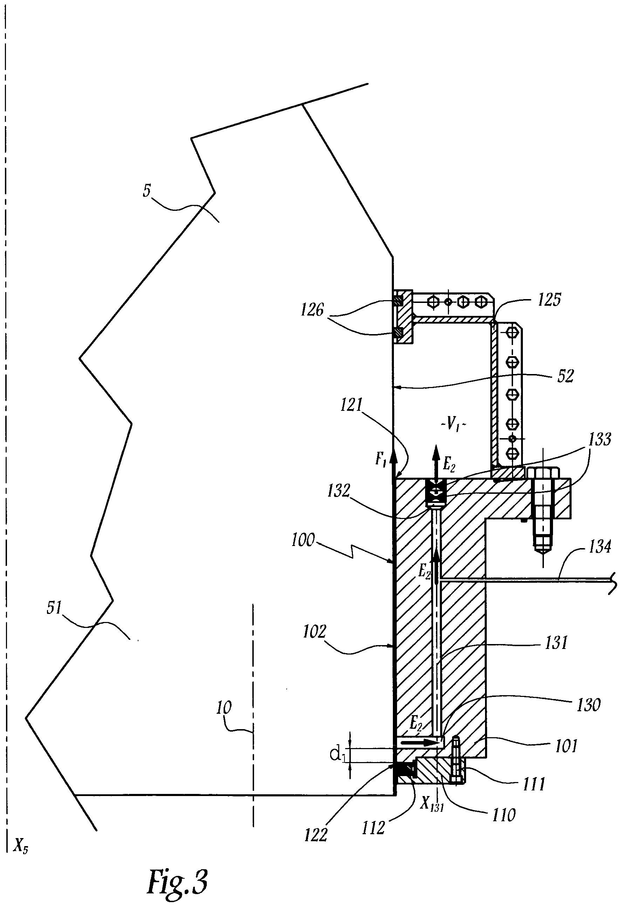

Lors d'un nouveau démarrage de la turbine 1 et avant mise en rotation de l'arbre 5, le joint 112 reprend normalement sa configuration représentée à la figure 2, dans laquelle il est éloigné de la surface 52. Il peut toutefois arriver que ce joint soit détérioré et qu'il reste en configuration d'appui contre la surface 52, alors même que l'arbre 5 tourne, comme représenté à la figure 3. Dans ce cas, la portion de l'écoulement E₁ qui est normalement évacuée du palier 100 au niveau du bord inférieur 122, comme représenté par la flèche F₂, pourrait rester prisonnière du palier 100, ce qui serait préjudiciable pour son fonctionnement, notamment car la portance serait réduite et car cela induirait à un échauffement localisé du film d'eau, voire sa vaporisation.

Une gorge annulaire 130 est ménagée dans le coussinet 101 et débouche sur la surface 102 tout autour de l'axe X₅. On note d₁ la distance axiale entre la gorge 130 et le bord 102. La distance d₁ est la distance entre le bord inférieur de la gorge 130 et le bord 122. On note h₁₀₀ la hauteur ou longueur axiale du palier 100, cette distance et cette hauteur étant mesurées parallèlement à l'axe X₅. La distance d₁ est choisie inférieure à 10% de la hauteur h₁₀₀, de préférence inférieure à 5% de cette hauteur.

On note h₁₃₀ la hauteur ou longueur axiale de la gorge 130, mesurée parallèlement à l'axe X₅. La hauteur h₁₃₀ est très inférieure à la hauteur h₁₀₀, de sorte que la présence de la gorge 130 ne perturbe pas l'épaisseur e₁₀₀ sur la majeure partie du palier 100 qui est située au-dessus de la gorge 130. Par exemple, pour un palier 100 de hauteur h₁₀₀ comprise entre 300 et 400 mm, la gorge 130 a une hauteur axiale h₁₃₀ comprise entre 10 et 15 mm. En pratique, la valeur de la hauteur axiale h₁₃₀ représente entre 2,5 et 5% de la hauteur axiale h₁₀₀.

On note p₁₃₀ la profondeur radiale de la gorge 130, c'est-à-dire la profondeur sur laquelle elle s'étend dans le coussinet 101 à partir de la surface 102. Cette profondeur est au moins vingt-cinq fois supérieure à l'épaisseur e₁₀₀, de préférence supérieure à cinquante fois cette épaisseur.

La gorge 130 est en communication avec quatre conduits 131, dont un seul est visible à la figure 3, et qui sont régulièrement répartis dans le coussinet 101, autour de l'axe X₅. Chaque conduit 131 s'étend le long d'un axe X₁₃₁ parallèle à l'axe X₅ et relie la gorge 130 à un logement 132 dans lequel sont disposés plusieurs diaphragmes 133 et qui débouche dans le volume V₁. Les conduits 131 sont séparés du palier 100 par la matière du coussinet 101, grâce à la valeur de la profondeur p₁₃₀.

Ainsi, en cas de blocage du joint 112 en configuration dilatée ayant pour effet d'empêcher l'évacuation de l'écoulement E₁ vers le bas, la portion correspondante E₂ de l'écoulement E₁ peut s'écouler dans la gorge 130 et dans les conduits 131 puis, à travers les diaphragmes 133, avant de rejoindre le volume V₁ à partir duquel elle peut être évacuée vers le puits d'exhaure. Ceci permet donc d'assurer une circulation continue d'eau dans le palier 100 jusque dans sa portion inférieure, y compris en cas de dysfonctionnement du joint gonflable 112.

Une partie de l'écoulement E₁ continue à être évacuée du palier 100 au niveau du bord 121, comme représenté par la flèche F₁. Cette partie rejoint l'écoulement E₂ dans le volume V₁.

Les diaphragmes 133 assurent une perte de charge au niveau du logement 132, de telle sorte que, lorsque le joint gonflable 112 fonctionne correctement, la perte de charge totale à travers les parties 130, 131 et 132 est supérieure à la perte de charge au niveau du bord 122, de telle sorte que l'écoulement dans le sens de la flèche F₂ à la figure 2 est privilégié.

Les éléments 130 à 133 permettent également d'évacuer directement vers le volume V₁ un éventuel écoulement pollué remontant depuis la roue 2 en cas d'inefficacité du joint gonflable 112 à l'arrêt. En effet, cette eau polluée peut être drainée à travers la gorge 130, les conduits 131 et les logements 132, ce qui permet de protéger le palier 100 contre la pollution.

Un piquage 134 débouchant dans l'un des conduits 131 est relié à un manomètre 135, ce qui permet de connaître la pression d'eau à l'intérieur de l'un au moins des conduits 131. Le manomètre 135 peut délivrer à une unité de commande 200 un signal S₁₃₅ représentatif de la pression dans le ou les conduits 131. Ce signal permet à l'unité 200 de détecter un défaut de fonctionnement, dans la mesure où une variation de pression dans l'un des conduits 131 correspond à une obstruction de la sortie basse du palier 100, au niveau de son bord 122 ou, à l'arrêt, à une fuite du joint 112. L'unité 200 peut ainsi modifier les conditions de fonctionnement de la turbine 1 en tenant compte d'une telle anomalie, par exemple en adressant aux directrices 72 un signal S₂₀₀ visant à réduire progressivement le débit de l'écoulement E. En fonction du signal S₁₃₅, l'unité 200 peut également actionner une alarme 136 sonore ou visuelle.

Le mode de réalisation des figures 1 à 3 permet de tenir compte d'une obstruction en partie basse du palier 100, indépendamment de l'utilisation du joint gonflable 112. En effet, si le palier 100 est obstrué au voisinage du bord 122 par autre chose que le joint 112, la circulation de l'écoulement E₂ peut avoir lieu à travers les volumes 130 à 132.

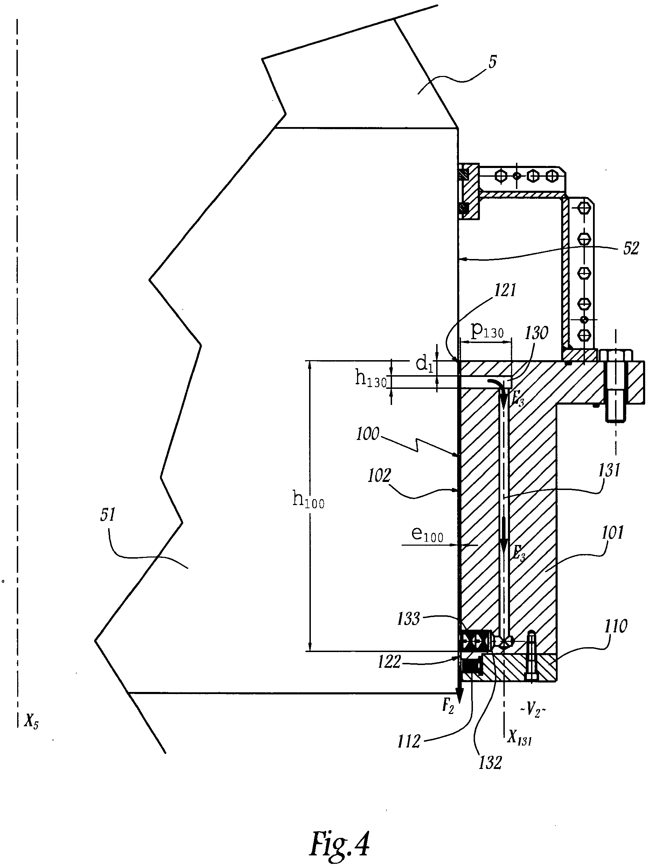

Dans le second mode de réalisation de l'invention représenté à la figure 4, les éléments analogues à ceux du premier mode de réalisation portent les mêmes références. Un palier hydrostatique radial 100 est défini entre la surface radiale externe 52 du pied 51 d'un arbre 5 et la surface radiale interne 102 d'un coussinet fixe 101. Un joint gonflable 112 est rapporté sur le coussinet 101 au moyen d'une bride annulaire 110.

Une gorge annulaire 130 est ménagée à proximité du bord supérieur 121 du palier 100 et reliée à quatre conduits 131 qui s'étendent chacun parallèlement à un axe X₁₃₁ parallèle à l'axe de rotation X₅ de l'arbre 5. Chaque conduit 131 débouche, à l'opposé de la gorge 130, dans un logement 132 qui débouche lui-même sur la surface 102, au-dessus du bord inférieur 122 du palier 100. Des diaphragmes 133 sont disposés dans le logement 132, avec la même fonction que les diaphragmes du premier mode de réalisation.

On note respectivement d₁ la distance axiale entre le bord 121 et la gorge 130, h₁₀₀ la hauteur axiale du palier 100, e₁₀₀ son épaisseur radiale, h₁₃₀ la hauteur axiale de la gorge 130 et p₁₃₀ sa profondeur radiale. d₁ est inférieure à 10% de h₁₀₀, de préférence inférieure à 5% de cette hauteur. h₁₃₀ est comprise entre 2,5 et 5% de h₁₀₀. p₁₃₀ est supérieure à vingt-cinq fois e₁₀₀, de préférence supérieure à cinquante fois e₁₀₀.

En cas d'obstruction de la partie supérieure du palier 100, par exemple par des déchets s'écoulant à partir du volume V₁, une portion E₃ de l'écoulement d'alimentation du palier 100 s'engage dans la gorge 130 et dans les conduits 131 puis ressort en partie basse du pallier 100, c'est-à-dire au voisinage de son bord inférieur 122, à travers les logements 132. A partir de là, l'eau provenant de la partie supérieure du palier 100, à travers les éléments 130 à 132, peut être évacuée vers le bas en direction d'un volume V₂ situé sous le palier, avec l'eau provenant directement de la partie inférieure du palier 100, ce que représente la flèche F₂ à la figure 4.

Les caractéristiques techniques des deux modes de réalisation décrits ci-dessus peuvent être combinées entre elles. En particulier, une machine conforme à l'invention peut comprendre à la fois une gorge 130 en partie basse reliée par des conduits 131 au volume V₁ et une gorge 130 en partie haute reliée par des conduits 131 à la partie basse du palier 100.

Le nombre de conduits 131 n'est pas forcément à égal à quatre et peut être adapté en fonction du débit prévisible des écoulements E₂ et/ou E₃ à évacuer en cas d'obstruction localisée du palier.

Bien que cela soit avantageux pour répartir circonférentiellement les écoulements E₂ et E₃, il n'est pas obligatoire d'utiliser une gorge 130 périphérique. En effet, plusieurs cavités non jointives s'étendant chacune sur un secteur angulaire prédéterminé peuvent être prévues débouchantes dans la surface 102, chaque cavité étant reliée à un conduit du type des conduits 131 mentionnés ci-dessus.

Enfin, la surface tournante qui définie le palier hydrostatique radial peut appartenir à une partie de l'arbre monobloc avec sa partie principale, comme mentionné ci-dessus au sujet du pied d'arbre 51, ou à une partie rapportée sur cette partie principale.

Dans les deux modes de réalisation décrits ci-dessus, la gorge 130 et les moyens de communication 131, 132 et 133 sont actifs pour évacuer une partie E₂ ou E₃ du film d'eau, uniquement en cas d'obstruction du bord 122 ou 121 du palier 100 à proximité duquel se trouve la gorge 130. En effet, en fonctionnement normal du palier 100, la perte de charge induite par les diaphragmes 133 est telle que le film d'eau s'écoule prioritairement par les bords 121 et 122.

L'invention a été décrite et représentée avec un palier 100 de type hydrostatique, c'est-à-dire un palier dont la portance dépend essentiellement de la pression d'alimentation du palier en eau. L'invention peut également être mise en oeuvre avec un palier hydrodynamique où la portance est obtenue par la vitesse de rotation de l'arbre. L'invention a été décrite et représentée ci-dessus en référence à une machine à axe vertical. L'invention est toutefois applicable aux machines à axe horizontal, voire à axe oblique, qui peuvent également être équipées de paliers hydrostatiques ou hydrodynamique.

## Revendications

1. Machine hydraulique comprenant une roue (2) supportée par un arbre (5), la roue et l'arbre étant mobiles en rotation autour d'un axe (X₅), alors qu'un palier hydrostatique ou hydrodynamique radial (100) à eau est formé entre, d'une part, une surface périphérique radiale (52) de l'arbre et, d'autre part, une surface radiale interne (102) d'un organe (101) fixe par rapport à l'axe, le palier s'étendant entre deux bords (121,122) constituant, en fonctionnement normal du palier (100) des zones d'évacuation (F₁, F₂) d'un film d'eau formé dans le palier, **caractérisée en ce que** au moins une cavité (130) est ménagée dans l'organe fixe (101) et débouche sur sa surface radiale interne (102) au voisinage d'un premier bord (121, 122) du palier, parmi les deux bords (121, 122) et **en ce que** l'organe fixe comprend des moyens (131, 132, 133) de mise en communication fluidique de la cavité avec un volume (V₁, V₂) situé à l'extérieur du palier (100), au voisinage du second bord (122, 121), parmi les deux bords, la cavité (130) et les moyens de mise en communication (131, 132, 133) étant aptes à évacuer une partie (E₂, E₃) d'un écoulement (E₁) formant le film d'eau, en cas d'impossibilité d'évacuation du film au niveau du premier bord..

2. Machine selon la revendication 1, **caractérisée en ce qu'**un joint batardeau (112) est disposé au voisinage du bord (122) du palier (100) tourné vers la roue (2).

3. Machine selon la revendication 2, **caractérisée en ce que** la machine est à axe vertical (X₅) et la cavité (130) est ménagée au-dessus du joint batardeau, au voisinage du bord inférieur (122) du palier (100) tourné vers la roue, et **en ce que** les moyens de mise en communication (131-133) relient la cavité avec un volume (V₁) de la machine située au-dessus du bord supérieur (121) par rapport au palier.

4. Machine selon la revendication 2, **caractérisée en ce que** la machine est à axe vertical (X₅), **en ce que** la cavité (130) est ménagée au voisinage du bord supérieur (121) du palier (100) et **en ce que** les moyens de mise en communication (131-133) relient la cavité avec une partie inférieure du palier, au-dessus du joint batardeau qui est disposé en dessous du bord inférieur (122) du palier (100), cette partie inférieure du palier étant en communication avec un volume (V₂) situé sous le palier, au voisinage de son bord inférieur (122).

5. Machine selon l'une des revendications précédentes, **caractérisée en ce que** la cavité est une gorge annulaire (130) ménagée dans l'organe fixe (101).

6. Machine selon l'une des revendications 1 à 4, **caractérisée en ce que** la cavité (130) est formée par la réunion de plusieurs cavités non jointives qui débouchent sur la surface radiale interne (102) de l'organe fixe (101) et sont chacune reliées à un conduit (131) ménagé dans l'organe fixe et appartenant aux moyens de mise en communication (131, 132, 133).

7. Machine selon l'une des revendications précédentes, **caractérisée en ce que** les moyens de mise en communication (131-133) comprennent des moyens (133) de réduction de pression.

8. Machine selon l'une des revendications précédentes, **caractérisée en ce que** les moyens de mise en communication (131-133) comprennent au moins un conduit (131) reliant la cavité (130) au volume (V₁, V₂) situé au voisinage du second bord (122, 121) du palier (100).

9. Machine selon l'une des revendications précédentes, **caractérisée en ce qu'**elle comprend des moyens (134, 135) de détermination de la pression d'eau dans un conduit (131) appartenant aux moyens de mise en communication (131-133).

10. Machine selon la revendication 9, **caractérisée en ce que** les moyens de détermination de pression (134, 135) sont aptes à fournir à une unité (200) de contrôle de la machine un signal (S₁₃₅) représentatif de la pression d'eau dans le conduit (131).

11. Machine selon l'une des revendications précédentes, **caractérisée en ce que** la cavité (130) s'étend à une distance axiale (d₁) du premier bord (122, 121) qui a une valeur inférieure à 10%, de préférence inférieure à 5%, de la dimension axiale (h₁₀₀) du palier (100).

12. Machine selon l'une des revendications précédentes, **caractérisée en ce que** la cavité (130) a une dimension axiale (h₁₃₀) dont la valeur est comprise entre 2,5 et 5% de la dimension axiale (h₁₀₀) du palier (100).

13. Machine selon l'une des revendications précédentes, **caractérisée en ce que** la cavité (130) a une profondeur radiale (p₁₃₀) sont la valeur est au moins vingt-cinq fois supérieure, de préférence cinquante fois supérieure à l'épaisseur radiale (e₁₀₀) du palier (100).

14. Installation (I) de conversion d'énergie hydraulique en énergie électrique ou mécanique, ou inversement, **caractérisée en ce qu'**elle comprend une machine hydraulique (1) selon l'une des revendications précédentes.

## Claims

1. A hydraulic machine including a wheel (2) supported by a shaft (5), the wheel and the shaft being mounted to move in rotation about an axis (X₅), while a radial hydrostatic or hydrodynamic water bearing (100) is formed between firstly a radially peripheral surface (52) of the shaft and secondly a radially inside surface (102) of a member (101) that is stationary relative to the axis, the bearing extending between two edges (121, 122) that, when the bearing (100) is operating normally, constitute removal zones (F₁, F₂) for removing a film of water that is formed in the bearing, said hydraulic machine being **characterized in that** at least one cavity (130) is provided in the stationary member (101) and opens out onto its radially inside surface (102) in the vicinity of a first one of the two edges (121, 122) of the bearing, and **in that** the stationary member is provided with means (131, 132, 133) for putting the cavity into fluid communication with a volume (V₁, V₂) situated outside the bearing (100), in the vicinity of the second of the two edges (122, 121) of the bearing, the cavity (130) and the communication means (131, 132, 133) being suitable for removing a fraction (E₂, E₃) of a flow (E₁) forming the film of water, in the event that removal of the film is impossible at the first edge.

2. A machine according to claim 1, **characterized in that** an expansion seal (112) is disposed in the vicinity of the edge (122) of the bearing (100) that faces towards the wheel (2).

3. A machine according to claim 2, **characterized in that** the machine is of vertical axis (X₅) and the cavity (130) is provided above the expansion seal, in the vicinity of the lower edge (122) of the bearing (100) that faces towards the wheel, and **in that** the communication means (131-133) connect the cavity to a volume (V₁) of the machine that is situated above the upper edge (121) relative to the bearing.

4. A machine according to claim 2, **characterized in that** the machine is of vertical axis (X₅), **in that** the cavity (130) is provided in the vicinity of the upper edge (121) of the bearing (100), and **in that** the communication means (131-133) connect the cavity to a lower portion of the bearing, above the expansion seal that is disposed below the lower edge (122) of the bearing (100), this lower portion of the bearing being in communication with a volume (V2) located below the bearing, in the vicinity of its lower edge (122).

5. A machine according to any preceding claim, **characterized in that** the cavity is an annular groove (130) provided in the stationary member (101).

6. A machine according to any one of claims 1 to 4, **characterized in that** the cavity (130) is formed by an association of a plurality of non-touching cavities that open out onto the radially inside surface (102) of the stationary member (101), and each of which is connected to a duct (131) provided in the stationary member and belonging to the communication means (131, 132, 133).

7. A machine according to any preceding claim, **characterized in that** the communication means (131-133) include pressure reduction means (133).

8. A machine according to any preceding claim, **characterized in that** the communication means (131-133) include at least one duct (131) connecting the cavity (130) to the volume (V₁, V₂) situated in the vicinity of the second edge (122, 121) of the bearing (100).

9. A machine according to any preceding claim, **characterized in that** it includes means (134, 135) for determining the water pressure in a duct (131) belonging to the communication means (131-133).

10. A machine according to claim 9, **characterized in that** the pressure determination means (134, 135) are suitable for delivering a signal (S₁₃₅) representative of the water pressure in the duct (131) to a control unit (200) for controlling the machine.

11. A machine according to any preceding claim, **characterized in that** the cavity (130) extends at an axial distance (d₁) from the first edge (122, 121) that has a value less than 10% of the axial dimension (h₁₀₀) of the bearing (100), and preferably less than 5% of said axial dimension.

12. A machine according to any preceding claim, **characterized in that** the cavity (130) has an axial dimension (h₁₃₀) having a value lying in the range 2.5% of the axial dimension (h₁₀₀) of the bearing (100) to 5% of said axial dimension.

13. A machine according to any preceding claim, **characterized in that** the cavity (130) has a radial depth (p₁₃₀) having a value at least twenty-five times greater than the radial thickness (e₁₀₀) of the bearing (100), and preferably fifty times said radial thickness.

14. An installation (I) for converting hydraulic energy into electrical or mechanical energy, or vice versa, said installation being **characterized in that** it includes a hydraulic machine (I) according to any preceding claim.

## Patentansprüche

1. Hydraulische Maschine mit einem von einer Welle (5) getragenen Laufrad (2), wobei das Laufrad und die Welle um eine Achse (X₅) drehbar beweglich sind, während ein radiales hydrostatisches oder hydrodynamisches Wasserlager (100) zwischen einer radialen Umfangsfläche (52) der Welle einerseits und einer radialen Innenfläche (102) eines bezüglich der Achse ortsfesten Organs (101) andererseits ausgebildet ist, wobei sich das Lager zwischen zwei Kanten (121, 122) erstreckt, die im normalen Betrieb des Lagers (100) Abführungszonen (F₁, F₂) zum Abführen eines in dem Lager ausgebildeten Wasserfilms bilden,
**dadurch gekennzeichnet,**
**dass** mindestens eine Aussparung (130) in dem ortsfesten Organ (101) vorgesehen ist und in der Nähe einer ersten Kante (121, 122) von zwei Kanten (121, 122) des Lagers auf die radiale Innenfläche (102) des ortsfesten Organs hin ausmündet,
und **dass** das ortsfeste Organ Verbindungseinrichtungen (131, 132, 133) zum fluidmäßigen Verbinden der Aussparung mit einem außerhalb des Lagers (100), in der Nähe der zweiten Kante (122, 121) von den beiden Kanten gelegenen Volumen (V₁, V₂) aufweist, wobei die Aussparung (130) und die Verbindungseinrichtungen (131, 132, 133) dazu geeignet sind, einen Teil (E₂, E₃) einer den Wasserfilm ausbildenden Strömung (E₁) abzuführen, falls ein Abführen des Films an der ersten Kante nicht möglich ist.

2. Maschine nach Anspruch 1,
**dadurch gekennzeichnet,**
**dass** eine Abschottdichtung (112) in der Nähe der dem Laufrad (2) zugewandten Kante (122) des Lagers (100) angeordnet ist.

3. Maschine nach Anspruch 2,
**dadurch gekennzeichnet,**
**dass** die Maschine eine Maschine mit Vertikalachse (X₅) ist und die Aussparung (130) über der Abschottdichtung in der Nähe der unteren, dem Laufrad zugewandten Kante (122) des Lagers (100) vorgesehen ist,
und **dass** die Verbindungseinrichtungen (131 - 133) die Aussparung mit einem bezüglich des Lagers über der oberen Kante (121) gelegenen Volumen (V₁) der Maschine verbinden.

4. Maschine nach Anspruch 2,
**dadurch gekennzeichnet,**
**dass** die Maschine eine Maschine mit Vertikalachse (X₅) ist,
**dass** die Aussparung (130) in der Nähe der oberen Kante (121) des Lagers (100) vorgesehen ist,
und **dass** die Verbindungseinrichtungen (131 - 133) die Aussparung mit einem unteren Teil des Lagers über der Abschottdichtung verbinden, die unterhalb der unteren Kante (122) des Lagers (100) angeordnet ist, wobei dieser untere Teil des Lagers mit einem unterhalb des Lagers in der Nähe dessen unterer Kante (122) gelegenen Volumen (V₂) in Verbindung steht.

5. Maschine nach einem der vorherigen Ansprüche,
**dadurch gekennzeichnet,**
**dass** die Aussparung eine in dem ortsfesten Organ (101) vorgesehene Ringnut (130) ist.

6. Maschine nach einem der Ansprüche 1 bis 4,
**dadurch gekennzeichnet,**
**dass** die Aussparung (130) durch den Zusammenschluss mehrerer nicht zusammenhängender Aussparungen ausgebildet ist, die auf die radiale Innenfläche (102) des ortsfesten Organs (101) hin ausmünden und jeweils mit einer Passage (131) verbunden sind, die in dem ortsfesten Organ vorgesehen ist und zu den Verbindungseinrichtungen (131, 132, 133) gehört.

7. Maschine nach einem der vorherigen Ansprüche,
**dadurch gekennzeichnet,**
**dass** die Verbindungseinrichtungen (131 - 133) Druckreduzierungseinrichtungen (133) aufweisen.

8. Maschine nach einem der vorherigen Ansprüche,
**dadurch gekennzeichnet,**
**dass** die Verbindungseinrichtungen (131 - 133) mindestens eine Passage (131) aufweisen, welche die Aussparung (130) mit dem in der Nähe der zweiten Kante (122, 121) des Lagers (100) gelegenen Volumen (V₁, V₂) verbindet.

9. Maschine nach einem der vorherigen Ansprüche,
**dadurch gekennzeichnet,**
**dass** sie Einrichtungen (134, 135) zum Bestimmen des Wasserdrucks in einer zu den Verbindungseinrichtungen (131 - 133) gehörenden Passage (131) aufweist.

10. Maschine nach Anspruch 9,
**dadurch gekennzeichnet,**
**dass** die Druckbestimmungseinrichtungen (134, 135) dazu geeignet sind, an eine Einheit (200) zum Steuern der Maschine ein Signal (S₁₃₅) zu liefern, das für den Wasserdruck in der Passage (131) repräsentativ ist.

11. Maschine nach einem der vorherigen Ansprüche,
**dadurch gekennzeichnet,**
**dass** sich die Aussparung (130) in einem axialen Abstand (d₁) von der ersten Kante (122, 121) erstreckt, dessen Wert weniger als 10 %, bevorzugt weniger als 5 % der axialen Abmessung (h₁₀₀) des Lagers (100) beträgt.

12. Maschine nach einem der vorherigen Ansprüche,
**dadurch gekennzeichnet,**
**dass** die Aussparung (130) eine axiale Abmessung (h₁₃₀) besitzt, deren Wert zwischen 2,5 % und 5 % der axialen Abmessung (h₁₀₀) des Lagers (100) beträgt.

13. Maschine nach einem der vorherigen Ansprüche,
**dadurch gekennzeichnet,**
**dass** die Aussparung (130) eine radiale Tiefe (p₁₃₀) besitzt, deren Wert mindestens 25-mal größer, bevorzugt 50-mal größer als die radiale Dicke (e₁₀₀) des Lagers (100) ist.

14. Anlage (I) zum Umwandeln von hydraulischer Energie in elektrische oder mechanische Energie oder umgekehrt,
**dadurch gekennzeichnet,**
**dass** sie eine hydraulische Maschine (1) nach einem der vorherigen Ansprüche aufweist.
